# EUROPEAN PATENT SPECIFICATION

(11) **EP 2 754 079 B1**
(45) Date of publication and mention of the grant of the patent: **17.11.2021**
(21) Application number: 12830037.3
(22) Date of filing: 06.09.2012
(51) Int. Cl.: G06F 8/61, G06F 21/56

(54) **MALWARE RISK SCANNER**
SCANNER FÜR SCHADPROGRAMMRISIKO
SCANNER DE PROTECTION CONTRE LES RISQUES DE LOGICIELS MALVEILLANTS

(30) Priority: 08.09.2011 US 201113227616
(43) Date of publication of application: 16.07.2014
(73) Proprietor: McAfee, LLC, Santa Clara, CA 95054 (US)
(72) Inventor: DOOL, Jamie, Kitchener, ON N2A 4L4 (CA); VARADARAJ, Vishnu, Waterloo, ON N2V 2K6 (CA); JUCHE, David Karl, Waterloo, ON N2T 2Z4 (CA)
(74) Representative: Goddar, Heinz J.
(86) International application number: PCT/US2012/054006
(87) International publication number: WO 2013/036673

(56) References cited:
- US-A1- 2003 192 033
- US-A1- 2005 048 448
- US-A1- 2006 101 282
- US-A1- 2006 130 141
- US-A1- 2008 109 906
- US-A1- 2009 007 096
- US-A1- 2009 217 379
- US-B1- 7 096 503
- "PC Magazine. Special Issue Fall 2004", PC MAGAZINE, 1 December 2004 (2004-12-01), XP055159453,
- Zulfikar Ramzan ET AL: "Reputation-based Security, An analysis of real world effectiveness", Symantec Security Response, 1 October 2010 (2010-10-01), XP055149113, Retrieved from the Internet: URL:http://www.symantec.com/content/en/us/ enterprise/media/security_response/whitepa pers/reputation_based_security.pdf [retrieved on 2014-10-27]

## Description

### CROSS REFERENCE TO RELATED APPLICATIONS

This Application claims priority to U.S. Application Serial No. 13/227,616, filed September 8, 2011.

### BACKGROUND

This disclosure relates generally to the field of malware detection computer software. More particularly, but not by way of limitation, it relates to an improved installation technique for malware detection, repair, and prevention computer software.

Malware is a broad term used to describe malicious software that infects computer systems. Malware can have varying degrees of effects, ranging from merely irritating to destructive. Malware includes software such as adware and spyware, as well as computer viruses, worms, and Trojan horses. With the vast number of devices connected to networks such as the Internet and the expansion of high speed connections to these networks, malware threats can spread from system to system extremely rapidly. Computer users are therefore commonly urged to employ some type of anti-malware applications, such as anti-virus software on their devices to detect and remove malware that may be installed on the device, as well as to prevent the future installation of malware.

Some customers purchase anti-malware software to clean an already infected computer. Malware already present on the computer is known to attack and in many cases prevent the installation of the anti-malware software or make the installation ineffective. To counter this, some malware detection software has performed a pre-install scan and cleaning of the system by the anti-malware software installer to attempt to ensure a successful install. However, this scan increases the initial download size and can also significantly impact the time to install the anti-malware software, providing a less then optimal installation experience.

"PC Magazine, Special Issue Fall 2004", PC Magazine, 1 December 2004 discloses anti-virus programs including "Norton Anti-Virus 2005" which includes a pre-install scan that works around infections that attempt to prevent NAVs installation. It automatically and silently downloads and installs virus signature updates and can run a quick scan of vulnerable files immediately afterwards.

US 7,096,503 B1 discloses a system and a method for remotely detecting vulnerabilities on a local computer. Initially, an agent is installed on a local computer for receiving encrypted commands from a remote computer utilizing a network. Next, the commands are decrypted and processed on the local computer utilizing the agent. The risk-assessment scan is then performed on the local computer utilizing the agent in accordance with the processed commands for the purpose of remotely detecting local vulnerabilities on the local computer.

US 2006/130141 A1 discloses a cleaner tool that may be obtained automatically through an update service or may be downloaded manually from a website or signal distribution system. The cleaner tool includes a specialized scanning engine that searches a computer for active malware. Since the scanning engine only searches for active malware, the amount of data downloaded and resource requirements of the cleaner tool are less than traditional anti-virus software. The scanning engine searches specific locations on a computer such as data mapped in memory, configuration files, and file metadata for data characteristic of malware. If malware is detected, the cleaner tool removes the malware from the computer.

The invention is defined in the independent claims. Embodiments of the invention are described in the dependent claims.

### BRIEF DESCRIPTION OF THE DRAWINGS

Figure 1 is a block diagram illustrating a network architecture according to one embodiment.
Figure **2** is a block diagram illustrating a computer on which software according to one embodiment may be installed.
Figure **3** is a block diagram illustrating an anti-malware software installation package according to one embodiment.
Figure **4** is a flowchart illustrating a technique for installing anti-malware software according to one embodiment.
Figure **5** is a flowchart illustrating one embodiment of the technique of FIG. **4** in greater detail.

### DETAILED DESCRIPTION

Various embodiments described in more detail below provide a technique for performing an analysis of a computer on which anti-malware software is to be installed prior to complete installation of the anti-malware software. If the analysis determines that the computer may already contain malware, then an attempt may be made to scan and clean the computer prior to a portion of the installation of the anti-malware software. Otherwise, the pre-installation scan and clean may be bypassed, allowing the installation of that portion of the anti-malware software.

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

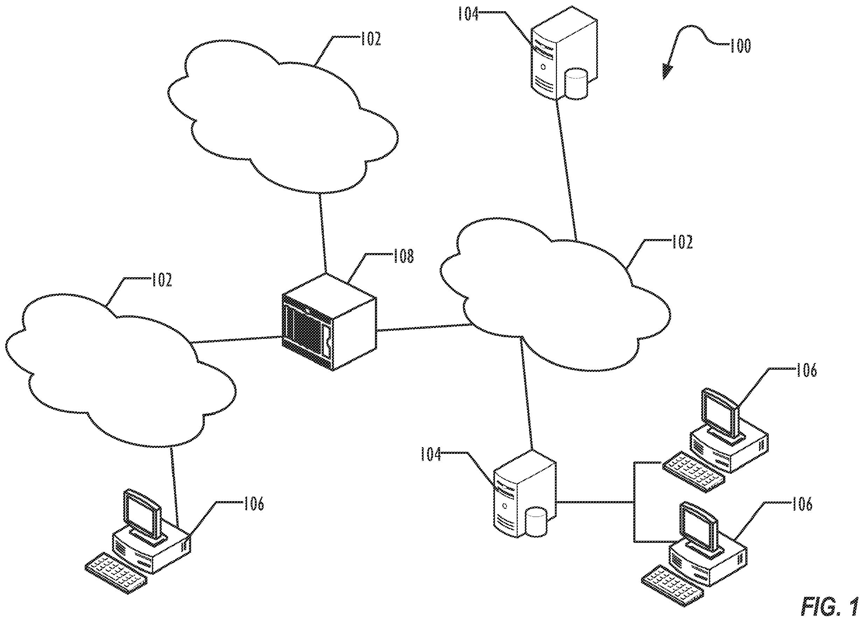

FIG. **1** illustrates a network architecture **100**, in accordance with one embodiment. As shown, a plurality of networks **102** is provided. In the context of the present network architecture **100,** the networks **102** may each take any form including, but not limited to a local area network (LAN), a wireless network, a wide area network (WAN) such as the Internet, etc.

Coupled to the networks **102** are data server computers **104** which are capable of communicating over the networks **102.** Also coupled to the networks **102** and the data server computers **104** is a plurality of end user computers **106.** Such data server computers **104** and/or client computers **106** may each include a desktop computer, lap-top computer, hand-held computer, mobile phone, hand-held computer, peripheral (e.g. printer, etc.), any component of a computer, and/or any other type of logic. In order to facilitate communication among the networks **102**, at least one gateway or router **108** is optionally coupled therebetween.

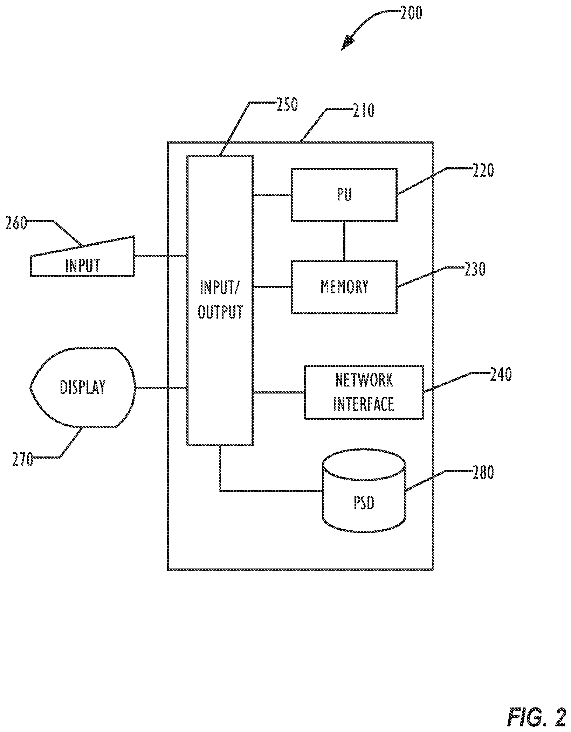

Referring now to FIG. 2, an example computer **FIG. 200** for use in providing an anti-malware software installation technique according to one embodiment is illustrated in block diagram form. The computer **200** may serve as a client computer **106** or a server computer **104.** Example computer **FIG. 200** comprises a system unit **FIG. 210** which may be optionally connected to an input device or system **FIG.** 260 (*e*.*g*., keyboard, mouse, touch screen, etc.) and display **FIG. 270.** A program storage device (PSD) **FIG. 280** (sometimes referred to as a hard disc) is included with the system unit **FIG.** 210. Also included with system unit **FIG. 210** is a network interface **FIG. 240** for communication via a network with other computing and corporate infrastructure devices (not shown). Network interface **FIG. 240** may be included within system unit **FIG. 210** or be external to system unit **FIG. 210.** In either case, system unit **FIG. 210** will be communicatively coupled to network interface **FIG. 240.** Program storage device **FIG. 280** represents any form of non-volatile storage including, but not limited to, all forms of optical and magnetic, including solid-state, storage elements, including removable media, and may be included within system unit **FIG. 210** or be external to system unit **FIG. 210.** Program storage device **FIG. 280** may be used for storage of software to control system unit **FIG. 210**, data for use by the computer **FIG. 200**, or both.

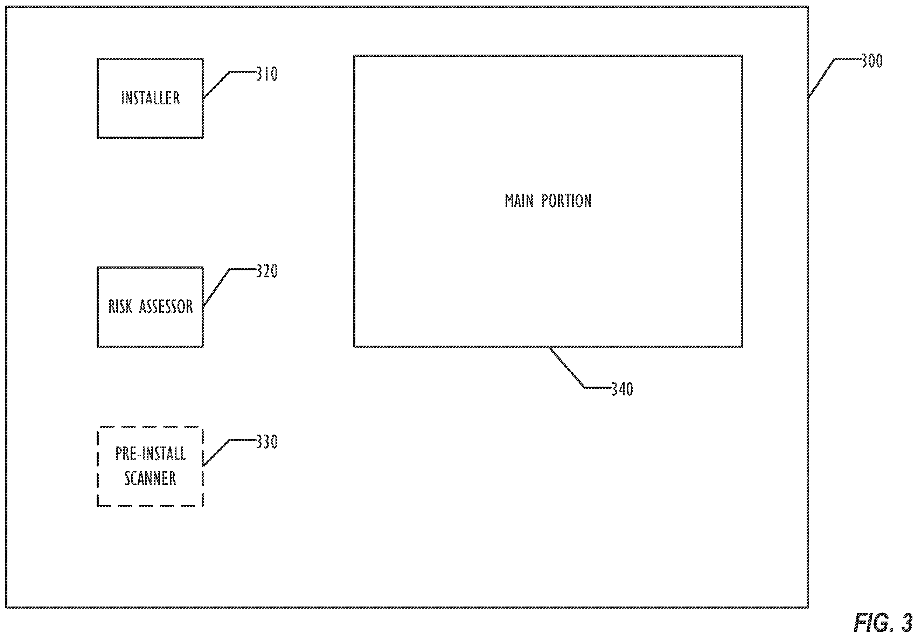

System unit **FIG. 210** may be programmed to perform methods in accordance with this disclosure (an example of which is in FIG. **3**). System unit **FIG. 210** comprises a processor unit (PU) **FIG. 220**, input-output (I/O) interface **FIG. 250** and memory **FIG. 230.** Processing unit **FIG. 220** may include any programmable controller device including, for example, one or more members of the Intel Atom^{®}, Core^{®}, Pentium^{®} and Celeron^{®} processor families from Intel Corporation and the Cortex and ARM processor families from ARM. (INTEL, INTEL ATOM, CORE, PENTIUM, and CELERON are registered trademarks of the Intel Corporation. CORTEX is a registered trademark of the ARM Limited Corporation. ARM is a registered trademark of the ARM Limited Company.) Memory **FIG. 230** may include one or more memory modules and comprise random access memory (RAM), read only memory (ROM), programmable read only memory (PROM), programmable read-write memory, and solid-state memory. The PU **FIG. 220** may also include some internal memory including, for example, cache memory.

The computer **200** may have resident thereon any desired operating system. Embodiments may be implemented using any desired programming languages, and may be implemented as one or more executable programs, which may link to external libraries of executable routines that may be provided by the provider of the anti-malware software, the provider of the operating system, or any other desired provider of suitable library routines.

In preparation for installing the anti-malware software on the computer **200**, embodiments may be provided stored on any type of non-transitory computer-readable media, or may be downloaded from a server **104** onto the program storage device **280.**

FIG. **3** Is a block diagram illustrating an anti-malware software installation packagc **300** according to one embodiment. Installer **310** generally performs the functionality of installing the anti-malware software, including launching the risk assessor **320** and the pre-install scanner **330**, in addition to basic install functionality. Risk assessor **320** generally performs an assessment whether the computer **200** on which the anti-malware software is to be installed is in a risky state because of the potential presence of malware on the computer **200.** Pre-install scanner **330** generally performs the functionality of a pre-installation scan of the computer **200**, as well as any cleaning actions that the pre-install scan determines should be performed. A main portion **340** comprises the packaged routines that once installed will perform the functionality of the anti-malware software. The package **300** may be provided on computer media such as an optical disc as part of a retail package for the anti-malware software. Alternately, the package **300** may be downloaded from a provider of the anti-malware software without the provision of a physical media.

In one embodiment, the pre-install scanner **330**, although illustrated as part of the package **300** in FIG. **3**, may be omitted from the package **300** as it is initially provided to the computer user. In such an embodiment, the installer **310**, upon receiving a result from the risk assessor **320** that the computer **200** is in a risky state, may obtain the pre-install scanner **330** from an external server, then launch the pre-install scanner **330** as described below. Thus, in such an embodiment, the size of the install package **300** may be reduced, because the pre-install scanner **330** does not need to be provided unless the risk assessor has concluded that the computer **200** is in a risky state that requires a pre-install scan.

In other embodiments, the pre-install scanner **330** may be provided as part of the package **300** initially, and may be launched without the need to download the pre-install scanner **330.**

Any portion of the package **300**, including the risk assessor **320**, the pre-install scanner **330**, and the main portion **340**, may be downloaded by execution of the installer **310** as desired. The package **300** may include components other than those illustrated in FIG. **3**, and the illustration of the installer **310**, risk assessor **320**, pre-install scanner **330**, and main portion **340** separately in FIG. **3** should not be understood to imply any particular form or packaging of those portions of the package **300.** Any of the features illustrated in FIG. **3** may be combined with any of the other features of the package **300** as desired.

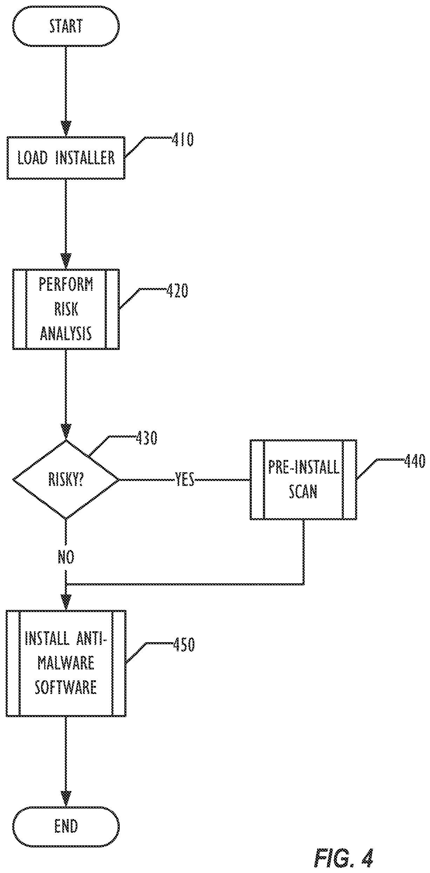

FIG. **4** is a flowchart illustrating a technique for installing anti-malware software according to one embodiment. In block **410**, the installer **310** is loaded into memory and begins execution. The installer **310** launches the risk assessor **320** which performs risk analysis on the computer **200** in block **420.** If the risk analysis produces a result indicating that the computer **200** is in a risky state because of the presence of malware on the computer **200**, as determined in block **430**, then the installer **310** may load the pre-install scanner **330**, which performs a pre-install scan and clean operation in block **440.**

If the determination in block **430** is that the computer is not in a risky state or following completion of the pre-install scan in block **440**, the installer **310** completes the installation process of the anti-malware software in block **450.**

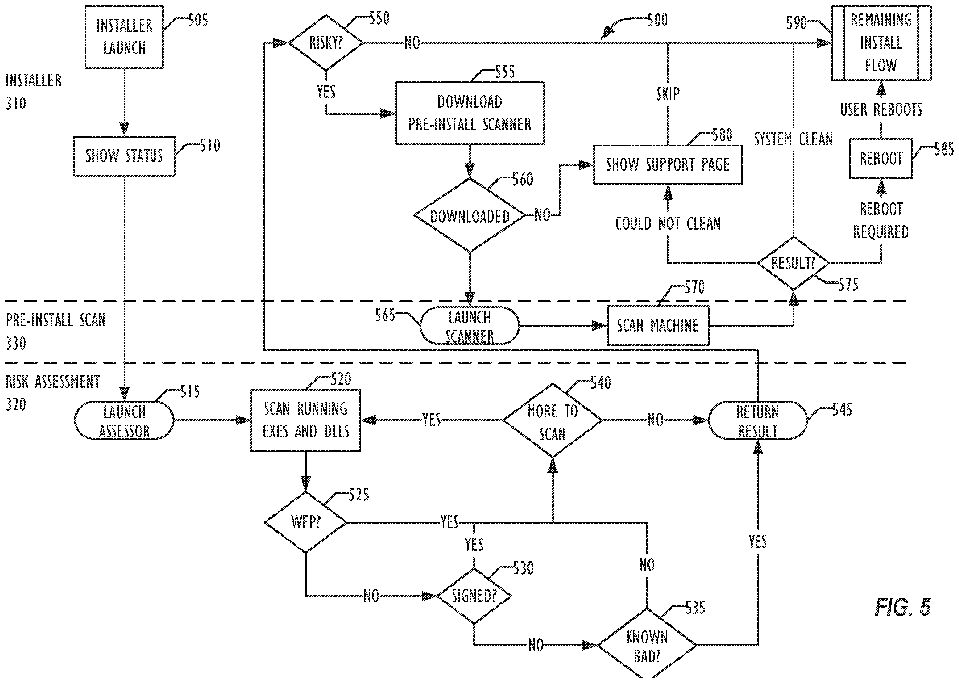

FIG. **5** is a flowchart illustrating one embodiment of a technique for installing anti-malware software in greater detail. The technique as illustrated in FIG. **5** comprises three general sections, corresponding to the installer **310**, pre-install scanner **330**, and risk assessor **320.**

Beginning in block **505**, the installer **310** for the anti-malware software is launched. The installer **310** may be provided by the provider of the anti-malware software, and may include routines provided by a vendor of the operating system that are generic to installation processes and may be used by multiple install programs.

In one embodiment, the status of the installation may be displayed for a user of the computer **200** in block **510.** This status typically tells the user that the installation of the software has begun, and may provide status information regarding the progress of the installation that is updated from time to time; however, any desired status information may be provided, and the display of status information may be omitted if desired.

The installer then launches the risk assessor **320** in block **515.** Some malware software is known to look for the execution of anti-malware software installers or other anti-malware software, triggering an attack upon the anti-malware software based on the name of the executable program. Therefore, in one embodiment, the risk assessor **320** may be named in such a way as to trigger the execution of such malware. For example, a risk assessor **320** provided by McAfee, Inc., the assignee of the present application, may be provided with a name that includes "mcafee" as part of the name of the executable.

The risk assessor **320** in block **520** may use any desired technique for determining the identity of software routines executing on the computer **200.** These software routines may include any type of executable routine, including dynamic link libraries. Each of the routines that is executing on the computer **200** may be evaluated for the risk of it being malware.

In one embodiment, a three-step technique may be used for the risk assessment. In block **525**, the risk assessor determines whether the executing routine is a protected executable. For example, some versions of the Microsoft WINDOWS® operating system ("WINDOWS" is a registered trademark of Microsoft Corporation) provide a Windows File Protection (WFP) feature that protects programs from replacing critical Windows system files. WFP protects critical system files that are installed as part of Windows (for example, files with a .dll, .exe, .ocx, and .sys extension, using file signatures and catalog files that are generated by code signing to verify if the protected system files are the correct Microsoft versions. The Windows operating system restores the original file if the file is changed by an unauthorized technique. Other operating systems may provide similar types of techniques for protecting critical executables. If the executing routine is a protected executable, then the risk assessor **320** may determine that the executable is safe and would not require a pre-install scan and clean operation.

If the executable is not a protected executable, then in block **530** the risk assessor **320** may determine whether the executable has been digitally signed. Digitally signed routines are generally considered to come from a legitimate company, because of the verification required by the provider of the digital signature certificate, and thus may not require a pre-install scan and clean operation.

If the executable is neither a protected executable nor digitally signed, then in one embodiment in block **535** the risk assessor **320** may send a query to an external system, providing information about the executable program to allow the external system to identify the executable and respond back to the risk assessor **320.** The external system may perform a lookup based on the information provided by the risk assessor **320** in a repository of information about executable programs available to the external system, responding with an indication whether the executable is known to be malware. For example, if the computer **200** being scanned is one of the clients **106** illustrated in FIG. **1**, the external system may be provided by one of the servers **104** also illustrated in FIG. **1****.**

If the running executable is protected or is signed, or if the external system indicates that the running executable is not known to be malware, then that executable may be ignored and in block **540** the risk assessor **320** determines whether any additional executables remain to be scanned, repeating beginning in block **520** if any such additional executables remain until all running executables have been scanned.

If the external system responds indicating that a running executable is known to be malware, or if the determination in block **540** is that no more executables remain to be scanned, then a result is returned to the installer in block **545.** If the external system responds with an indication that the running executable is known to be malware, then the result returned by the risk assessor **320** may indicate that there is a risk of installing the anti-malware software without performing a pre-install scan and clean operation.

In one embodiment, if the external system is unreachable or for any reason fails to return a response to the query from the risk assessor **320**, the risk assessor **320** may decide the running executable may be malware and return a result requesting a pre-install scan and clean operation. If all of the running executables are analyzed and no malware is detected, then the result returned by the risk assessor **320** may indicate that the pre-install scan and clean operation may be skipped.

The techniques described above for determining whether a running executable is malware are illustrative and by way of example only, and other desired techniques may be used in combination with the techniques described above, or in addition to those techniques. For example, other steps may be included to attempt to find rootkits. A rootkit is software that enables continued privileged access to a computer while actively hiding its presence from administrators by subverting standard operating system functionality or other applications.

In addition, some embodiments may provide risk assessment techniques that are tailored to specific types of malware, such as malware types that are particularly aggressive at attempting to hide themselves from and interfering with anti-malware software. In one embodiment a specific check for executables related to a type of malware identified by some portions of the anti-malware industry as "klez" may be included as one of the checks performed by the risk assessment program. In one embodiment, a specific check for executables related to a type of malware identified by some portions of the anti-malware industry as "sality" may be included as one of the checks performed by the risk assessment program. These type-specific risk assessment techniques may be included in addition to or instead of the three techniques described above.

In one embodiment, a risk assessor **320** employing multiple risk assessment techniques, such as illustrated in FIG. **5**, preferably orders the execution of the risk assessment techniques so that the techniques are performed with the quickest technique performed first, and other techniques following in order of quickness, so that the technique that takes the longest to perform is performed last. Alternately, a risk assessor **320** employing multiple risk assessment techniques may perform those techniques in parallel as desired.

In one embodiment, instead of employing local techniques such as the protected file and digital signature techniques of block **525** and **530**, the risk assessor **320** may employ only online techniques such as is illustrated in block **535.** In another embodiment, the risk assessor **320** may employ only local techniques, and not use a technique requiring access to an external system.

In one embodiment, the digital signature technique of block **530** may perform additional testing in addition to checking for the presence or absence of a digital signature. For example, the digital signature technique of block **530** may evaluate the trustworthiness of the digital signature by looking for well-known names in the digital signature, or by evaluating the reputation of the certification authority that provided the digital signature.

Once the risk assessment has been performed by the risk assessor **320**, the result is returned to the installer **310** which evaluates in block **550** whether the computer **200** is considered to be in a risky state. If the determination is that the computer **200** is not in a risky state, then the pre-install scan operation may be omitted, reducing the time required for the installation of the anti-malware software. In such a situation, the installer **310** may simply proceed in block **590** with the remainder of the installation process.

If the determination is that the computer **200** is in a risky state, then in block 355 the pre-install scanner **330** may be downloaded from an external system in block **555**, if it is not already part of the installation package **300.** The external system is typically provided by the provider of the anti-malware software and is typically a server such as one of the servers **104** illustrated in FIG. **1**, accessible through a network connection from the computer **200.**

In one embodiment, the installer **310** may detect in block **550** a situation where the risk assessor **320** fails to return any result. This may indicate a failure of the risk assessor **320**, but also may indicate a scenario in which malware already existing on the computer **200** detected and terminated the risk assessor **320**, such as by recognizing the name of the risk assessor **320** as described above. In such an embodiment, the installer **310** may consider a failure of the risk assessor **320** to return any result as an indication that the computer **200** is in a risky state, just as if the risk assessor **320** had returned a result indicating such a risky state.

In block **560**, a determination is made whether the download of the pre-install scanner **330** succeeded. If not, then in block **580**, a user interface for the installer **310** may display an indication of the failure to download the pre-install scanner **330.** The indication displayed by block **580** may be a window generated by the installer **310**, a support page displayed by a browser that is linked to from the installer **310**, or may be displayed by any other desired technique. Once the indication is displayed in block **580**, then the pre-install scan and clean operation may be skipped and the installer **310** proceeds in block **582** install the main portion **340** of the anti-malware software.

If the pre-install scanner **330** successfully downloads, or has previously been loaded onto the computer **200**, then the installer **310** launches the pre-install scanner **330** in block **565.** The pre-install scanner **330** may then scan the computer **200** in block **570** and take any cleaning actions that are considered necessary as a result of the scan.

In one embodiment, the scan performed in block **570** may be a modified version of the scan that would be performed by the anti-malware software after it is installed. Some types of malware that may be scanned during normal operation of the anti-malware software may be omitted from the pre-install scan of block **570** if the type of malware is deemed unlikely to cause problems during the installation process. For example, some anti-malware software attempts to locate and remove spyware, which typically collects small pieces of information about users without their knowledge. Spyware software may not affect the installation process of the anti-malware software and in one embodiment the pre-install scanner **330** may be configured to ignore spyware during the pre-install scan of block **570.** Other types of malware that are considered unlikely to affect the installation process may similarly be omitted, allowing the pre-install scan to be performed quicker and with less overhead than a post-install scan of the computer **200** by the anti-malware software.

The pre-install scan performed in block **570** may make use of an information resource, sometimes referred to as a DAT file, that contains information useful for detecting and removing malware. Alternately, or in addition to the local information resource, the pre-install scan performed by the pre-install scanner **330** in block **570** may request assistance from an external resource, such as may be provided by one of the servers **104**, for the purpose of identifying malware that may be present on the computer **200.** The DAT file may be downloaded as part of the pre-install scanner **330** in block **555**, or may be provided as part of the anti-malware installation package **300** as desired. Alternately, the DAT file may be downloaded by the pre-install scanner **330** as part of launching the pre-install scanner **330.** In one embodiment, the pre-install scan of block **570** uses only the services of the external resource for the identification of malware on the computer **200** and does not use a local DAT file for that purpose.

In addition to identifying malware already present on the computer **200**, the pre-install scan performed in block **570** may take indicated cleaning actions as may be necessary to remove detected malware from the computer **200** prior to the installation of the anti-malware software. In some situations, cleaning actions may require a reboot of the computer **200**, in which case the pre-install scanner **330** may provide an indication that a reboot is required as part of the results provided to the installer **310** upon completion of the pre-install scan and clean operation performed in block **570.**

In block **575**, the installer **310** examines an indication of the results of the pre-install scan and clean operation returned by the pre-install scanner **330.** In one embodiment, three types of results may be returned by the pre-install scanner **330.** In a first type of result, the pre-install scanner **330** may indicate that the scan and clean operation was successful, but a reboot of the computer **200** is required before completion of the installation process. In a second type of result, the pre-install scanner **330** may indicate that the computer **200** has been successfully cleaned. In a third type of result, the pre-install scanner **330** may indicate that the pre-install scanner **330** was unsuccessful in cleaning the computer **200.**

If the installer **310** receives a result from the pre-install scanner **330** indicating that the computer **200** could not be cleaned, then in one embodiment the installer **310** may display an indication in block **580** that the computer **200** could not be cleaned by the pre-install scanner **330.** In one embodiment, the installer **310** may proceed with the installation of the main portion **340** of the anti-malware software **300** in block **590** even though there may be a risk that the installation process may have problems because of the pre-existing malware that could not be cleaned from the computer **200.** In another embodiment, the installer **310** may allow a user to decide whether or not to proceed with the remainder of the installation of the anti-malware software. In yet another embodiment, the installer **310** may refuse to continue the installation and exit.

If the installer **310** receives a result from the pre-install scanner **330** indicating that the computer **200** is clean, then the installer **310** may proceed with the remaining portions of the installation process in block **590**, installing the main portion **340** of the anti-malware software installation package **300.**

If the installer **310** receives result from the pre-install scanner **330** indicating that a reboot is required, then in one embodiment in block **585** a user of the computer **200** may be offered an opportunity to reboot the computer **200.** In another embodiment, the installer **310** may cause a reboot of the computer **200** without asking permission from the user. In either embodiment, once the computer **200** is rebooted, then the installer **310** may complete the installation process, installing the main portion **340** of the installation package **300.**

By performing a pre-install scan and clean operation only when necessary, embodiments described above can speed up the process of installing anti-malware software without risking a failed or incompletely operative installation of the anti-malware software. The improved anti-malware installation process may encourage computer users to install the anti-malware software who otherwise might choose not to install the anti-malware software. Because the usage of unprotected computers allows malware to infect and possibly take over operation of unprotected computers, the improved installation techniques described above may benefit not only the user of the computer **200** but users of other computers in the network architecture **100.**

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled. In the appended claims, the terms "including" and "in which" are used as the plain-English equivalents of the respective terms "comprising" and "wherein."

As explained above this disclosure explains in one embodiment a method of performing a pre-scan prior to installing software including launching an installer for an anti-malware software on a first computer; performing a risk assessment of the first computer; performing a pre-install scan and clean operation on the first computer by a pre-install scanner responsive to a result of the risk assessment indicating that the computer is in a risky state; and installing a main portion of the anti-malware software responsive to the pre-install scan and clean operation. Performing a risk assessment can also include indicating that the first computer is in a risky state if malware is detected on the first computer or launching a risk assessor software by the installer. Additionally, the result of the risk assessment indicating that the computer is in a risky state can include a failure by the risk assessor software to return any result. Of course, the pre-install scanner can be downloaded from a second computer in response to a risk assessment. Alternatively or additionally, a pre-scan can include providing an indication that the pre-install scanner did not successfully download; and omitting the performance of the act of performing a pre-install scanning clean operation on the first computer.

## Claims

1. A method comprising:
launching (505) an installer for an anti-malware software on a first computer;
performing a risk assessment of the first computer, wherein the act of performing a risk assessment of the first computer comprises:
launching (515) a risk assessor software by the installer, the risk assessor:
determining whether a running executable program is a protected executable program and if it is determined that the running executable program is not a protected executable program, then determining (530) whether the running executable program has been digitally signed;
if it is determined that the running_executable program is neither a protected executable program nor digitally signed, then sending (535) a query to an external system, providing information about the running_executable program to allow the external system to identify the running_executable program and respond back to the risk assessor;
receiving (545) a response from the external system, and if the external system responds with an indication that the running executable program is known to be malware, then the result returned by the risk assessor indicates that there is a risk of installing the anti-malware software;
performing (570) a pre-install scan and clean operation on the first computer by a pre-install scanner responsive to a result of the risk assessment indicating that the computer is in a risky state, the risky state indicating that there is a risk of installing the anti-malware software without performing the pre-install scan and clean operation due to malware on the computer, the pre-install scan and clean operation to put the computer in a non-risky state; and
in response to determining that the computer is in a non-risky state, installing (590) a main portion of the anti-malware software.

2. The method of claim 1, further comprising, if it is determined that the running executable is a protected executable or is signed, or if the external system indicates that the running executable is not known to be malware, then ignoring the executable.

3. The method of claim 1, wherein the result of the risk assessment indicating that the first computer is in a risky state comprises a failure by the risk assessor software to return any result.

4. The method of claim 1, further comprising:
downloading (555) the pre-install scanner from a second computer, responsive to the risk assessment.

5. The method of claim 4, further comprising:
providing an indication that the pre-install scanner did not successfully download; and omitting the performance of the act of performing a pre-install scan and clean operation on the first computer.

6. The method of claim 1, further comprising: indicating that the pre-install scanner did not succeed in cleaning the first computer of malware discovered by the pre-install scanner.

7. The method of claim 1, further comprising:
asking a user of the first computer whether to attempt to perform the act of installing a main portion of the anti-malware software if the pre-install scan and clean operation did not succeed in cleaning the first computer.

8. The method of claim 1, wherein the act of installing a main portion of the anti-malware software comprises requesting a user of the first computer to reboot (585) the first computer; and installing a main portion of the anti-malware software after rebooting the first computer.

9. The method of any preceding claim, wherein the act of performing a pre-install scan and clean operation on the first computer by a pre-install scanner responsive to a result of the risk assessment indicating that the computer is in a risky state comprises: ignoring a first malware, wherein the first malware is known not to impact installation of the anti-malware software.

10. The method of claim 1, wherein the act of performing a risk assessment of the first computer comprises:
performing a plurality of checks on each executable running on the first computer; and
determining whether the first computer is in a risky state responsive to the plurality of checks.

11. The method of claim 10, wherein one of the plurality of checks comprises:
determining whether an executable is an operating system protected file.

12. A server computer, comprising:
a processor; and
a storage subsystem, coupled to the processor, on which is stored instructions that when executed by a client computer, cause the client computer to perform actions, comprising:
launching (515) a risk assessor software by the installer, the risk assessor being configured to:
determine whether a running executable program is a protected executable program and if it is determined that the running executable program is not a protected executable program, then determining (530) whether the running executable program has been digitally signed;
if it is determined that the running executable program is neither a protected executable program nor digitally signed, then sending (535) a query to an external system, provide information about the running executable program to allow the external system to identify the running executable program and respond back to the risk assessor;
receive a response from the external system, and if the external system responds with an indication that the running executable program is known to be malware, then the result returned by the risk assessor indicates that there is a risk of installing the anti-malware software;
receive a request for a pre-install scanner software from the client computer attempting to install an anti-malware software determined to be in a risky state, the risky state indicating that there is a risk of installing the anti-malware software without the pre-install scanner software due to malware on the client computer;
send the pre-install scanner software to the client computer for execution prior to installing a portion of the anti-malware software,
wherein the pre-install scanner comprises instructions that when executed by the client computer, cause the client computer to perform actions comprising:
scanning the client computer for malware installed on the client computer; and
cleaning the client computer of malware discovered by performing the act of scanning the client computer for malware installed on the client computer to put the client computer in a non-risky state.

13. An apparatus comprising means to perform a method as claimed in any of claims 1-11.

14. A machine-readable storage medium including machine-readable instructions, when executed, to implement a method or realize an apparatus as claimed in any preceding claim.

## Patentansprüche

1. Verfahren, das Folgendes umfasst:
Starten (505) eines Installers für eine Anti-Malware-Software auf einem ersten Computer;
Durchführen einer Risikobewertung des ersten Computers, wobei der Akt des Durchführens einer Risikobewertung des ersten Computers umfasst:
Starten (515) einer Risikobewertungssoftware durch den Installer, wobei der Risikobewerter:
Bestimmen, ob ein laufendes ausführbares Programm ein geschütztes ausführbares Programm ist, und wenn bestimmt wird, dass das laufende ausführbare Programm kein geschütztes ausführbares Programm ist, dann Bestimmen (530), ob das laufende ausführbare Programm digital signiert worden ist;
wenn festgestellt wird, dass das laufende ausführbare Programm weder ein geschütztes ausführbares Programm noch digital signiert ist, dann Senden (535) einer Abfrage an ein externes System, Bereitstellen von Informationen über das laufende ausführbare Programm, um es dem externen System zu ermöglichen, das laufende ausführbare Programm zu identifizieren, und Zurückantworten an den Risikobewerter;
Empfangen (545) einer Antwort von dem externen System, und wenn das externe System mit einer Anzeige antwortet, dass das laufende ausführbare Programm als Malware bekannt ist, dann zeigt das von dem Risikobewerter zurückgegebene Ergebnis an, dass ein Risiko der Installation der Anti-Malware-Software besteht;
Durchführen (570) einer Vorinstallations-Scan- und Säuberungsoperation auf dem ersten Computer durch einen Vorinstallations-Scanner als Reaktion auf ein Ergebnis der Risikobewertung, das anzeigt, dass sich der Computer in einem risikoreichen Zustand befindet, wobei der risikoreiche Zustand anzeigt, dass ein Risiko besteht, die Anti-Malware-Software zu installieren, ohne die Vorinstallations-Scan- und Säuberungsoperation aufgrund von Malware auf dem Computer durchzuführen, wobei die Vorinstallations-Scan- und Säuberungsoperation den Computer in einen risikofreien Zustand versetzt; und
als Reaktion auf die Feststellung, dass sich der Computer in einem Nicht-Risiko-Zustand befindet, Installieren (590) eines Hauptteils der Anti-Malware-Software.

2. Verfahren nach Anspruch 1, ferner umfassend, wenn festgestellt wird, dass die laufende ausführbare Datei eine geschützte ausführbare Datei ist oder signiert ist, oder wenn das externe System anzeigt, dass die laufende ausführbare Datei nicht als Malware bekannt ist, dann Ignorieren der ausführbaren Datei.

3. Verfahren nach Anspruch 1, wobei das Ergebnis der Risikobewertung, das anzeigt, dass sich der erste Computer in einem riskanten Zustand befindet, ein Versagen der Risikobewerter-Software aufweist, ein Ergebnis zurückzugeben.

4. Verfahren nach Anspruch 1, ferner umfassend:
Herunterladen (555) des Vorinstallations-Scanners von einem zweiten Computer in Reaktion auf die Risikobewertung.

5. Verfahren nach Anspruch 4, das ferner Folgendes umfasst:
Bereitstellen eines Hinweises, dass der Vorinstallations-Scanner nicht erfolgreich heruntergeladen wurde; und
Unterlassen der Durchführung des Akts eines Durchführens einer Vorinstallations-Scan- und Säuberungsoperation auf dem ersten Computer.

6. Verfahren nach Anspruch 1, das ferner Folgendes umfasst:
Anzeigen, dass es dem Vorinstallations-Scanner nicht gelungen ist, den ersten Computer von der durch den Vorinstallations-Scanner entdeckten Malware zu säubern.

7. Verfahren nach Anspruch 1, das ferner Folgendes umfasst:
Abfragen eines Benutzers des ersten Computers, ob versucht werden soll, den Akt der Installation eines Hauptteils der Anti-Malware-Software durchzuführen, wenn die Vorinstallations-Scan- und Säuberungsoperation nicht erfolgreich waren, den ersten Computer zu säubern.

8. Verfahren nach Anspruch 1, wobei der Akt des Installierens eines Hauptteils der Anti-Malware-Software umfasst:
Auffordern eines Benutzers des ersten Computers, den ersten Computer neu zu starten (585); und
Installieren eines Hauptteils der Anti-Malware-Software nach dem Neustart des ersten Computers.

9. Verfahren nach einem der vorhergehenden Ansprüche, wobei der Akt des Durchführens einer Vorinstallations-Scan- und Säuberungsoperation auf dem ersten Computer durch einen Vorinstallations-Scanner als Reaktion auf ein Ergebnis der Risikobewertung, die anzeigt, dass sich der Computer in einem riskanten Zustand befindet, Folgendes umfasst:
Ignorieren einer ersten Malware, wobei bekannt ist, dass die erste Malware die Installation der Anti-Malware-Software nicht beeinflusst.

10. Verfahren nach Anspruch 1, wobei der Akt des Durchführens einer Risikobewertung des ersten Computers Folgendes umfasst:
Durchführen einer Vielzahl von Prüfungen für jede ausführbare Datei, die auf dem ersten Computer läuft; und
Bestimmen, ob sich der erste Computer in einem risikoreichen Zustand befindet, als Reaktion auf die Vielzahl von Prüfungen.

11. Verfahren nach Anspruch 10, wobei eine der mehreren Überprüfungen Folgendes umfasst:
Bestimmen, ob eine ausführbare Datei eine betriebssystemgeschützte Datei ist.

12. Server-Computer, umfassend:
einen Prozessor; und
ein mit dem Prozessor gekoppeltes Speichersubsystem, in dem Anweisungen gespeichert sind, die, wenn sie von einem Client-Computer ausgeführt werden, den Client-Computer veranlassen, Aktionen durchzuführen, die Folgendes umfassen:
Starten (515) einer Risikobewertungssoftware durch den Installer, wobei der Risikobewerter konfiguriert ist, um:
zu bestimmen, ob ein laufendes ausführbares Programm ein geschütztes ausführbares Programm ist, und wenn bestimmt wird, dass das laufende ausführbare Programm kein geschütztes ausführbares Programm ist, dann zu bestimmen (530), ob das laufende ausführbare Programm digital signiert worden ist;
wenn festgestellt wird, dass das laufende ausführbare Programm weder ein geschütztes ausführbares Programm noch digital signiert ist, dann senden (535) einer Abfrage an ein externes System, bereitstellen von Informationen über das laufende ausführbare Programm, um es dem externen System zu ermöglichen, das laufende ausführbare Programm zu identifizieren und zurückantworten an den Risikobewerter;
Empfangen einer Antwort von dem externen System, und wenn das externe System mit einer Angabe antwortet, dass das laufende ausführbare Programm als Malware bekannt ist, dann zeigt das von dem Risikobewerter zurückgegebene Ergebnis an, dass ein Risiko für die Installation der Anti-Malware-Software besteht;
Empfangen einer Anforderung für eine Vorinstallations-Scanner-Software von dem Client-Computer, der versucht, eine Anti-Malware-Software zu installieren, die als in einem riskanten Zustand befindlich bestimmt wurde, wobei der riskante Zustand anzeigt, dass ein Risiko besteht, die Anti-Malware-Software ohne die Vorinstallations-Scanner-Software aufgrund von Malware auf dem Client-Computer zu installieren;
Senden der Vorinstallations-Scanner-Software an den Client-Computer zur Ausführung vor der Installation eines Teils der Anti-Malware-Software,
wobei der Vorinstallations-Scanner Anweisungen umfasst, die, wenn sie von dem Client-Computer ausgeführt werden, den Client-Computer veranlassen, Aktionen durchzuführen, die Folgendes umfassen:
Scannen des Client-Computers nach auf dem Client-Computer installierter Malware; und
Reinigen des Client-Computers von Malware, die durch Ausführen des Akts des Scannens des Client-Computers nach auf dem Client-Computer installierter Malware entdeckt wurde, um den Client-Computer in einen risikofreien Zustand zu versetzen.

13. Vorrichtung mit Mitteln zur Durchführung eines Verfahrens nach einem der Ansprüche 1-11.

14. Maschinenlesbares Speichermedium, das maschinenlesbare Befehle aufweist, die, wenn sie ausgeführt werden, ein Verfahren implementieren oder eine Vorrichtung realisieren, wie in einem der vorhergehenden Ansprüche beansprucht wurde.

## Revendications

1. Procédé comprenant les étapes ci-dessous consistant à :
lancer (505) un programme d'installation pour un logiciel anti-programme malveillant sur un premier ordinateur ;
mettre en oeuvre une évaluation des risques du premier ordinateur, dans laquelle l'étape de mise en oeuvre d'une évaluation des risques du premier ordinateur comprend les étapes ci-dessous consistant à :
lancer (515) un logiciel évaluateur des risques, par le biais du programme d'installation, dans lequel l'évaluateur des risques met en oeuvre les étapes ci-dessous consistant à :
déterminer si un programme exécutable en cours d'exécution est un programme exécutable protégé, et s'il est déterminé que le programme exécutable en cours d'exécution n'est pas un programme exécutable protégé, alors déterminer (530) si le programme exécutable en cours d'exécution a été signé numériquement ;
s'il est déterminé que le programme exécutable en cours d'exécution n'est ni un programme exécutable protégé ni signé numériquement, alors envoyer (535) une requête, à un système externe, fournissant des informations sur le programme exécutable en cours d'exécution pour permettre au système externe d'identifier le programme exécutable en cours d'exécution et de répondre à l'évaluateur des risques ;
recevoir (545) une réponse en provenance du système externe, et si le système externe répond avec une indication indiquant que le programme exécutable en cours d'exécution est connu comme étant un programme malveillant, alors le résultat renvoyé par l'évaluateur des risques indique qu'il existe un risque en ce qui concerne l'installation du logiciel anti-programme malveillant ;
mettre en oeuvre (570) une opération de balayage et de nettoyage de pré-installation sur le premier ordinateur, par le biais d'un scanneur de pré-installation, en réponse à un résultat de l'évaluation des risques indiquant que l'ordinateur est dans un état à risque, l'état à risque indiquant qu'il existe un risque en ce qui concerne l'installation du logiciel anti-programme malveillant sans mise en oeuvre de l'opération de balayage et de nettoyage de pré-installation, en raison de la présence de programmes malveillants sur l'ordinateur, l'opération de balayage et de nettoyage de pré-installation étant destinée à mettre l'ordinateur dans un état sans risque ; et
en réponse à une détermination selon laquelle l'ordinateur est dans un état sans risque, installer (590) une partie principale du logiciel anti-programme malveillant.

2. Procédé selon la revendication 1, comprenant en outre l'étape consistant à, s'il est déterminé que le programme exécutable en cours d'exécution est un programme exécutable protégé ou qu'il est signé numériquement, ou si le système externe indique que le programme exécutable en cours d'exécution n'est pas connu comme étant un programme malveillant, ignorer le programme exécutable.

3. Procédé selon la revendication 1, dans lequel le résultat de l'évaluation des risques qui indique que le premier ordinateur est dans un état à risque comprend un échec du logiciel évaluateur des risques à renvoyer un quelconque résultat.

4. Procédé selon la revendication 1, comprenant en outre l'étape ci-dessous consistant à :
télécharger (555) le scanneur de pré-installation à partir d'un second ordinateur, en réponse à l'évaluation des risques.

5. Procédé selon la revendication 4, comprenant en outre les étapes ci-dessous consistant à :
fournir une indication indiquant que le scanneur de pré-installation n'a pas réussi à se télécharger ; et
omettre la mise en oeuvre de l'étape de mise en oeuvre d'une opération de balayage et de nettoyage de pré-installation sur le premier ordinateur.

6. Procédé selon la revendication 1, comprenant en outre l'étape ci-dessous consistant à :
indiquer que le scanneur de pré-installation n'a pas réussi à nettoyer, sur le premier ordinateur, le ou les programme malveillants découverts par le scanneur de pré-installation.

7. Procédé selon la revendication 1, comprenant en outre l'étape ci-dessous consistant à :
demander à un utilisateur du premier ordinateur s'il convient de tenter de mettre en œuvre l'étape d'installation d'une partie principale du logiciel anti-programme malveillant si l'opération de balayage et de nettoyage de pré-installation n'a pas réussi à nettoyer le premier ordinateur.

8. Procédé selon la revendication 1, dans lequel l'étape d'installation d'une partie principale du logiciel anti-programme malveillant comprend l'étape consistant à demander à un utilisateur du premier ordinateur de redémarrer (585) le premier ordinateur, et l'étape consistant à installer une partie principale du logiciel anti-programme malveillant suite au redémarrage du premier ordinateur.

9. Procédé selon l'une quelconque des revendications précédentes, dans lequel l'étape de mise en oeuvre d'une opération de balayage et de nettoyage de pré-installation sur le premier ordinateur, par le biais d'un scanneur de pré-installation, en réponse à un résultat de l'évaluation des risques indiquant que l'ordinateur est dans un état à risque, comprend l'étape ci-dessous consistant à :
ignorer un premier programme malveillant, dans lequel le premier programme malveillant est connu comme n'ayant pas d'incidence sur l'installation du logiciel anti-programme malveillant.

10. Procédé selon la revendication 1, dans lequel l'étape de mise en oeuvre d'une évaluation des risques du premier ordinateur comprend les étapes ci-dessous consistant à :
mettre en oeuvre une pluralité de contrôles sur chaque programme exécutable en cours d'exécution sur le premier ordinateur ; et
déterminer si le premier ordinateur est dans un état à risque en réponse à la pluralité de contrôles.

11. Procédé selon la revendication 10, dans lequel un contrôle de la pluralité de contrôles consiste à :
déterminer si un programme exécutable correspond à un fichier protégé de système d'exploitation.

12. Ordinateur serveur, comprenant :
un processeur ; et
un sous-système de stockage, couplé au processeur, sur lequel sont stockées des instructions qui, lorsqu'elles sont exécutées par un ordinateur client, amènent l'ordinateur client à mettre en oeuvre les étapes ci-dessous consistant à :
lancer (515) un logiciel évaluateur des risques, par le biais du programme d'installation, dans lequel l'évaluateur des risques est configuré de manière à :
déterminer si un programme exécutable en cours d'exécution est un programme exécutable protégé, et s'il est déterminé que le programme exécutable en cours d'exécution n'est pas un programme exécutable
protégé, alors déterminer (530) si le programme exécutable en cours d'exécution a été signé numériquement ;
s'il est déterminé que le programme exécutable en cours d'exécution n'est ni un programme exécutable protégé ni signé numériquement, alors envoyer (535) une requête, à un système externe, fournissant des informations sur le programme exécutable en cours d'exécution pour permettre au système externe d'identifier le programme exécutable en cours d'exécution et de répondre à l'évaluateur des risques ;
recevoir une réponse en provenance du système externe, et si le système externe répond avec une indication indiquant que le programme exécutable en cours d'exécution est connu comme étant un programme malveillant, alors le résultat renvoyé par l'évaluateur des risques indique qu'il existe un risque en ce qui concerne l'installation du logiciel anti-programme malveillant ;
recevoir une demande concernant un logiciel scanneur de pré-installation, en provenance de l'ordinateur client, tentant d'installer un logiciel anti-programme malveillant déterminé comme étant dans un état à risque, l'état à risque indiquant qu'il existe un risque en ce qui concerne l'installation du logiciel anti-programme malveillant sans le logiciel scanneur de pré-installation, en raison de la présence de programmes malveillants sur l'ordinateur client ;
envoyer le logiciel scanneur de pré-installation à l'ordinateur client pour exécution avant l'installation d'une partie du logiciel anti-programme malveillant ;
dans lequel le scanneur de pré-installation comprend des instructions qui, lorsqu'elles sont exécutées par l'ordinateur client, amènent l'ordinateur client à mettre en oeuvre les étapes ci-dessous consistant à :
balayer l'ordinateur client à la recherche de programmes malveillants installés sur l'ordinateur client ; et
nettoyer, sur l'ordinateur client, le ou les programmes malveillants découverts, en mettant en oeuvre l'étape de balayage de l'ordinateur client à la recherche de programmes malveillants installés sur l'ordinateur client, afin de mettre l'ordinateur client dans un état sans risque.

13. Appareil comprenant des moyens pour mettre en oeuvre un procédé selon l'une quelconque des revendications 1 à 11.

14. Support de stockage lisible par machine comprenant des instructions lisibles par machine, qui, lorsqu'elles sont exécutées, mettent en oeuvre un procédé ou réalisent un appareil selon l'une quelconque des revendications précédentes.
